(19) Europäisches Patentamt
European Patent Office
Office européen des brevets

(11) Numéro de publication: **0 101 343**
**A1**

(12) # DEMANDE DE BREVET EUROPEEN

(21) Numéro de dépôt: 83401437.5

(22) Date de dépôt: 12.07.83

(51) Int. Cl.$^{3}$: C 08 G 65/32
C 08 K 5/04, C 08 L 67/06

(30) Priorité: 27.07.82 FR 8213099

(43) Date de publication de la demande: 22.02.84 Bulletin 84/8

(84) Etats contractants désignés: AT BE CH DE FR GB IT LI LU NL SE

(71) Demandeur: P C U K PRODUITS CHIMIQUES UGINE KUHLMANN
Service Propriété Industrielle Tour Manhattan
F-92087 Paris La Défense 2 Cédex 21(FR)

(72) Inventeur: Ochsenbein, Michel
9 rue Marcel Philippe
F-60100 Creil(FR)

(72) Inventeur: Ollivier, Jean-Paul
25 rue de Crimée
F-75009 Paris(FR)

(74) Mandataire: Foiret, Claude et al,
P C U K Produits Chimiques Ugine Kuhlmann Service Propriété Industrielle Tour Manhattan - Cedex 21
F-92087 Paris la Défense 2(FR)

(54) **Additif antiretrait pour polyester insaturé, son procédé de fabrication, composition antiretrait.**

(57) Additif antiretrait pour polyester insaturé de formule:

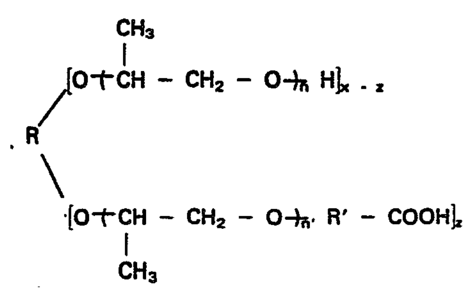

avec:
R : le reste de l'amorceur triol ou tétrol
x : 3 ou 4
z : ≥1
R' : le reste du radical du produit porteur de fonction acide.
et, "n + n'" étant tel que la masse moléculaire du composé oxypropylé non acidifié soit de préférence comprise entre 1 000 et 3 000.
Cet additif peut être introduit dans les compositions à base de polyester insaturé contenant un monomère à non saturation éthylénique à raison de 5 à 30 parties.

EP 0 101 343 A1

Additif antiretrait pour polyester insaturé, son procédé de fabrication, composition antiretrait

La présente invention concerne un additif antiretrait pour les résines polyesters insaturés. Il s'agit d'un polyéther tri ou tétrafonctionnel, produit de condensation d'oxyde de propylène sur un triol ou un tétrol, ledit produit de condensation étant acidifié de façon telle qu'il possède au moins une fonction acide terminale par molécule élémentaire.

Les moulages d'objets à base de résine polyester insaturé sont bien connus. Il est également connu que la plupart des résines polyesters insaturés conventionnelles conduisent à des retraits volumiques, pouvant être estimés de l'ordre de 8 à 10 p. 100, qui provoquent de nombreux défauts sur les objets moulés : craquelures, non respect des cotes, retassures aux nervures, mauvais aspect de surface.

Pour pallier ces inconvénients, il a été proposé de nombreux adjuvants à ajouter aux polyesters insaturés. En particulier il a été proposé dans le brevet français 1 530 817 ou le brevet américain 3 925 300 d'ajouter à certains types de polyesters insaturés des polymères thermoplastiques. Toutefois si cette addition permet d'obtenir des objets possédant un bon aspect de surface avec pratiquement pas de retrait à partir d'un moulage humide, elle est sans effet dans le cas des moulages en masse ou en feuilles. De façon plus spécifique il est proposé dans le brevet allemand 2 354 716 d'associer au polyester un copolymère éthylène-acétate de vinyle ou éthylène-propionate de vinyle, mais les résultats obtenus sont peu satisfaisants industriellement.

Outre le fait que ces techniques ne donnent pas entière satisfaction, elles présentent l'inconvénient, du fait de l'introduction des fortes quantités de résine thermoplastique, d'avoir des formulations de viscosité généralement élevées nécessitant la diminution du taux de charges inertes ce qui entraîne ainsi l'augmentation du prix des produits moulés.

Un des avantages du présent additif, outre le principal qui est d'être un agent permettant de compenser le retrait des résines polyesters insaturés est d'être un liquide de basse viscosité permettant une grande liberté dans le taux de charges des formules pour moulages, quels qu'ils soient.

Un autre avantage de l'additif est de permettre l'obtention d'objets moulés possédant un bon aspect de surface et ne présentant pratiquement pas de retassures aux nervures.

L'additif selon l'invention peut être formulé :

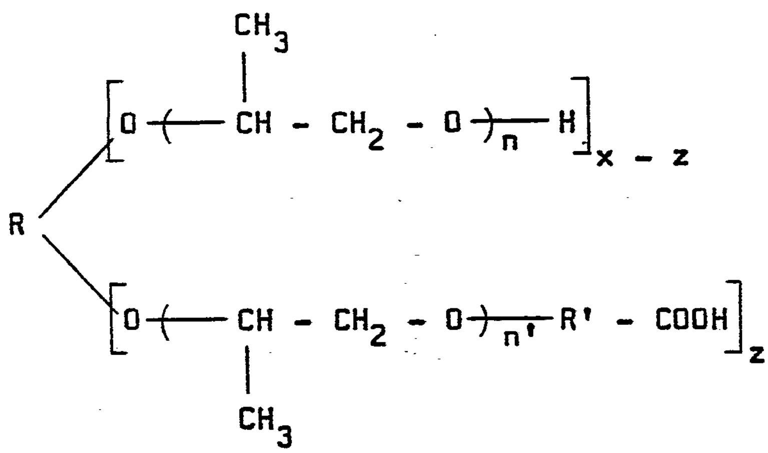

avec

R : le reste de l'amorceur triol ou tétrol

x : la fonctionnalité de l'amorceur, égale à 3 ou 4

z : le nombre de fonctions hydroxyles terminales acidifiées, z étant $\geqslant 1$

R' : le reste du radical du produit porteur de fonction acide

et "n + n'" étant tel que la masse moléculaire du composé oxypropylé non acidifié, ou encore, du produit de condensation d'oxyde de propylène sur le triol ou tétrol soit comprise de préférence entre 1 000 et 3 000 et mieux entre 1 400 et 2 400. Il est entendu que n et n' peuvent être égaux ou différents.

Une des façons de préparer cet additif consiste à polyétheri-

0101343

fier un polyol puis à acidifier le polyol polyéther.

Les polyols polyéthers peuvent être obtenus par un procédé classique qui consiste à additionner l'oxyde de propylène sur un triol ou un tétrol. On obtient un polyol polyéther de structure :

$$R\left[O\left(\underset{\displaystyle CH_3}{\overset{}{CH}}-CH_2-O\right)_n H\right]_x$$

R et x étant tels que définis précédemment.

La quantité d'oxyde de propylène "n" condensée sur le triol ou tétrol est telle que la masse moléculaire du polyol obtenu soit comprise de préférence entre 1 000 et 3 000.

On peut obtenir le polyol polyéther en faisant réagir un composé alcalin comme le sodium ou potassium, ou encore un alcoolate de sodium ou de potassium d'alcools courts, le méthanol, éthanol, propanol, butanol, tertiobutanol, etc. sur le triol ou le tétrol. On fait ensuite réagir l'oxyde de propylène sur l'alcoolate à une température comprise entre 80°C et 150°C. Le polyol polyéther est récupéré après neutralisation ou encore par adsorption par exemple sur silicate de magnésium. A titre d'exemple le polyol initial peut être le triméthylolpropane, le pentaérythritol, le glycérol.

Le polyol polyéther obtenu est acidifié de façon à ce qu'au moins une fonction terminale par molécule soit carboxylique. L'acidification s'effectue selon les procédés classiques de chimie organique permettant de passer d'une fonction hydroxyle à une fonction acide. On peut à titre d'exemple citer la réaction d'un anhydride cyclique, comme l'anhydride phtalique, succinique ou encore l'anhydride maléique sur le polyol polyéther. Cette réaction peut s'effectuer en mélangeant et maintenant vers 150°C sous reflux le mélange polyol-anhydride

pendant le temps suffisant à l'acidification.

Les meilleures performances de l'additif sont obtenues pour des compositions comprenant :

(a) 20 à 50 parties en poids d'un polyester insaturé
(b) 5 à 30 parties en poids de l'additif ci-dessus
(c) 20 à 65 parties d'un monomère à non saturation éthylénique.

Le polyester insaturé utilisable est un produit classique connu en soi. Il est habituellement préparé par condensation d'un acide dicarboxylique à non saturation éthylénique en α, β ou un anhydride ou des mélanges de ces derniers avec un diol ou des mélanges de diols. De tels polyesters sont largement décrits dans la littérature comme par exemple dans le brevet français 1 530 817 déjà cité. Les polyesters insaturés particulièrement recommandés sont ceux possédant un facteur de poids moléculaire par double liaison carbone-carbone de 150 à 186. Il est également nécessaire et ce de façon connue d'incorporer dans les compositions polyesters insaturés un monomère à non saturation éthylénique. Habituellement ce monomère possède au moins un groupe $CH_2 = C <$ réactif polymérisable. Le plus souvent ce monomère est le styrène.

Les compositions à base d'additif selon l'invention, peuvent contenir tous les autres adjuvants utilisés avec les polyesters insaturés. A titre indicatif on peut citer les fibres ou tissus de verre, charges, colorants, polymères thermoplastiques et autres. L'adjonction aux formulations d'une faible quantité de polymère thermoplastique, en général inférieure à 2,5 parties en poids par rapport aux trois constituants de la composition précédente, permet d'améliorer l'homogénéité au fluage de la composition.

Les exemples suivants illustrent l'invention sans toutefois la limiter.

Le retrait linéaire des exemples se définit à partir des

éléments suivants :

Lo = longueur du moule à 20°C
lo = largeur du moule à 20°C
L = longueur de la plaque moulée mesurée après refroidissement à 20°C
l = largeur de la plaque moulée mesurée après refroidissement à 20°C
R = retrait linéaire

$$R = \frac{(Lo + lo) - (L + l)}{Lo + lo} \times 100$$

Les aspects de surface et les retassures au droit des nervures sont appréciés visuellement.

Les essais d'application concernent des produits de moulage appelés préimprégnés ou Sheet Molding Compound. La technique consiste à mélanger la résine polyester insaturé, le styrène, l'additif antiretrait avec des peroxydes, des charges inertes, des agents de démoulage. Ce mélange réalisé on ajoute classiquement un agent épaississant comme de la magnésie. Le mélange final est étalé sur un film polyéthylène par exemple au moyen d'une râcle. On dépose sur ce mélange des fibres de verre d'environ 25 à 50 mm de longueur. Un deuxième film de polyéthylène vient recouvrir l'ensemble de façon à former un sandwich. Sous l'action de la magnésie, le mélange épaissit. Lorsque la consistance est suffisante, on procède au moulage. Le moulage s'effectue sous presse dont le moule est chauffé à environ 150°C. La pression sur la matière est d'environ 70 kg/cm$^2$. Avant moulage le mélange est débarrassé des films de polyéthylène. La pression fait fluer la matière de façon à remplir le moule et la température provoque la décomposition du peroxyde assurant ainsi la copolymérisation entre le styrène et le polyester insaturé. Le moule utilisé permet de réaliser une plaque nervurée.

EXEMPLE 1

Dans un autoclave de 6 l équipé d'un agitateur, d'une prise de température et d'un système de régulation de température on introduit 402 parties de triméthylolpropane et 15,8 parties de potasse en pastilles à 85 %. On chauffe le mélange sous agitation de 110°C sous un vide de 1 à 5 mm de mercure pendant 1 heure de manière à éliminer l'eau formée par l'alcoolatation et celle contenue dans la potasse. Puis on ajoute au moyen d'une pompe 4 300 parties d'oxyde de propylène en 6 heures environ à 115 - 120°C. Après l'introduction de l'oxyde on maintient le mélange réactionnel à 120°C pendant 2 heures.

On distille l'oxyde de propylène non réagi à 100°C sous vide de 1 à 5 mm de mercure.

Le produit est ensuite déminéralisé par 135 parties de silicate de magnésium et 22,5 parties d'agent de filtration.

Le polyéther polyol est ensuite filtré à chaud sous pression. Le produit ainsi obtenu a les caractéristiques suivantes :

| | | |
|---|---|---|
| indice d'hydroxyle | = | 108 |
| fonctionnalité | = | 3 |
| masse moléculaire | = | 1 550 |

1 550 grammes du polyéther polyol sont introduits dans un réacteur avec 222 g d'anhydride phtalique. Le mélange est agité et chauffé sous reflux à 140°C pendant huit heures. L'additif ainsi obtenu possède les caractéristiques suivantes :

| | | |
|---|---|---|
| indice d'acide | = | 50 |
| masse moléculaire | = | 1 700 |

Il est alors introduit dans les formulations A et B pour moulage préimprégné comme indiqué précédemment.

Les formulations adoptées sont les suivantes en parties en

poids :

| | A | B |
|---|---|---|
| *Masse polyester insaturé | 42 | 42 |
| Styrène | 41 | 41 |
| Additif | 11 | 11 |
| Charge $CaCO_3$ | 220 | 220 |
| Stéarate de zinc | 5 | 5 |
| Perbenzoate de butyl tertiaire | 1,5 | 1,5 |
| Magnésie | 1 | 1 |
| Polyacétate de vinyle en solution à 40 % dans le styrène | - | 5 |
| Fibre de verre coupée de longueur 25 mm environ | 25 % par rapport au poids total | |

* produit de condensation d'anhydride maléique et de propylène glycol.

Après fabrication du préimprégné et moulage on obtient les résultats suivants :

| | A | B |
|---|---|---|
| Retrait linéaire | 0,0140 | 0,0139 |
| Aspect de surface | bon, aspect homogène | brillant homogène |
| Retassures | très faibles, à peine apparentes | très faibles, à peine apparentes |

EXEMPLE 2

On opère selon l'exemple 1 mais en remplaçant le triméthylol-propane par 276 g de glycérine sur laquelle on fait réagir 4 524 g d'oxyde de propylène. Le polyol polyéther ainsi obtenu est traité par 222 g d'anhydride phtalique pour obtenir un produit dont l'indice d'acide est de 47 et la masse moléculaire de 1 725.

Cet additif est introduit dans la même formulation A que celle de l'exemple 1. Le produit est moulé et on obtient les résultats suivants :

retrait linéaire = - 0,0157
aspect de surface = Brillant homogène, très bon
retassures = non apparentes

Il faut noter que le chiffre négatif du retrait linéaire indique un gonflement de la matière par rapport au moule à la température ambiante d'environ 20°C.

EXEMPLE 3 (comparatif)

On opère selon l'exemple 1 mais en diminuant la quantité d'oxyde de propylène introduite pour limiter la masse moléculaire. Après traitement par l'anhydride phtalique le produit obtenu possède les caractéristiques suivantes :

indice d'acide = 95
masse moléculaire = 667

Ce produit introduit dans la même formulation que dans l'exemple 1 A donne après moulage les résultats suivants :

retrait linéaire = 0,18
aspect de surface = très mauvais
retassures = très apparentes

EXEMPLE 4

On opère selon l'exemple 1 mais en remplaçant le triméthylolpropane par 1 004 parties de pentaérythrite préalablement oxypropylée de masse moléculaire 334 sur laquelle on ajoute 3 682 parties d'oxyde de propylène.

1 540 g du produit obtenu de masse moléculaire 1 540 et de fonctionnalité 4 sont traités par 148 g d'anhydride phtalique

pour donner un composé de masse moléculaire 1 625 et d'indice d'acide égal à 31,3. De la même façon que précédemment on réalise la formulation pour préimprégné de l'exemple 1 A et après moulage on obtient les résultats suivants :

retrait linéaire = - 0,0200
aspect de surface = très bon
retassures = non apparentes

EXEMPLE 5 (comparatif)

La formulation suivante est réalisée :

| | |
|---|---|
| Masse polyester insaturé selon l'exemple 1 | 42 |
| Polyacétate de vinyle en solution à 40 % dans le styrène | 5 |
| Styrène | 53 |
| Charge $CaCO_3$ | 220 |
| Stéarate de zinc | 5 |
| Perbenzoate de butyl tertiaire | 1,5 |
| Magnésie | 1 |
| Fibre de verre coupée de longueur 25 mm environ | 25 % par rapport au poids total |

Après moulage on obtient un produit possédant les caractéristiques suivantes :

retrait linéaire = 0,260
aspect de surface = très mauvais
retassures = très apparentes, présence de craquelures.

Revendications de brevet

1 - Additif antiretrait pour polyester insaturé caractérisé en ce qu'il est représenté par un polyéther tri ou tétra fonctionnel, produit de condensation d'oxyde de propylène sur un triol ou tétrol, ledit produit de condensation étant acidifié de façon telle qu'il possède au moins une fonction acide terminale par molécule élémentaire.

2 - Additif selon la revendication 1 de formule :

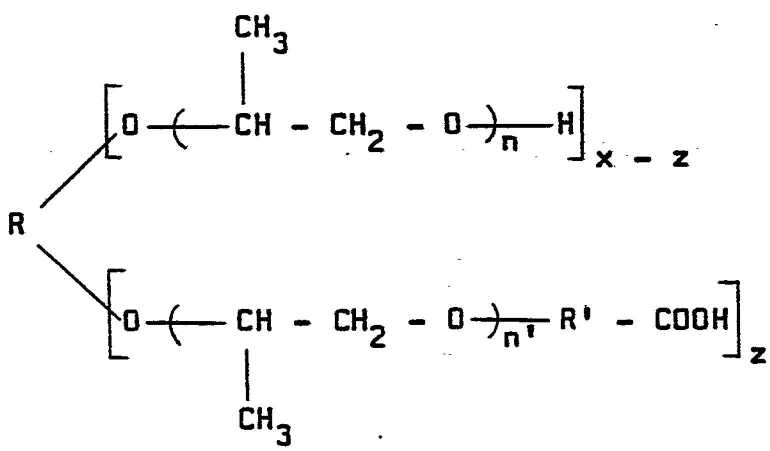

avec

R : le reste de l'amorceur triol ou tétrol

x : 3 ou 4

z : $\geqslant 1$

R' : le reste du radical du produit porteur de fonction acide

et "n + n'" étant tel que la masse moléculaire du composé oxypropylé non acidifié soit comprise entre 1 000 et 3 000.

3 - Additif selon la revendication 2 caractérisé en ce que R' est le reste d'un anhydride cyclique.

4 - Procédé de fabrication de l'additif selon la revendication 1 caractérisé en ce qu'on condense sur un triol ou un tétrol un oxyde de propylène de façon à obtenir un polyol polyéther sur lequel on substitue par acidification au moins une fonction hydroxyle terminale par une fonction acide.

5 - Procédé de fabrication selon la revendication 4 caractérisé en ce qu'on condense sur un triol ou un tétrol une quantité d'oxyde de propylène telle qu'on obtienne un polyol polyéther de masse moléculaire comprise entre 1 000 et 3 000.

6 - Procédé de fabrication selon l'une des revendications 4 à 5 caractérisé en ce qu'on fait réagir sur le polyol polyéther un anhydride cyclique en quantité telle qu'au moins une fonction hydroxyle terminale soit substituée par une fonction acide.

7 - Composition à base de polyester insaturé contenant un monomère à non saturation éthylénique caractérisée en ce qu'elle comprend :

(a) 20 à 50 parties en poids d'un polyester insaturé
(b) 5 à 30 parties en poids de l'additif selon l'une des revendications 1 à 6
(c) 20 à 65 parties en poids d'un monomère à non saturation éthylénique.

8 - Composition selon la revendication 7 caractérisée en ce qu'elle contient moins de 2,5 parties d'un polymère thermoplastique (d).

**0101343**

Office européen des brevets

# RAPPORT DE RECHERCHE EUROPEENNE

Numéro de la demande

EP 83 40 1437

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | FR-A-2 172 374 (BAYER AG.)<br>* Revendications 1-4; page 2, lignes 13-31 *<br>--- | 1-6 | C 08 G 65/32<br>C 08 K 5/09<br>C 08 L 67/06 |
| A | DE-A-2 139 330 (CHEMISCHE WERKE ALBERT)<br>* Revendication 1 *<br>----- | 7 | |
| | | | **DOMAINES TECHNIQUES RECHERCHES (Int. Cl. 3)** |
| | | | C 08 G<br>C 08 K<br>C 08 L |

Le présent rapport de recherche a été établi pour toutes les revendications

| Lieu de la recherche | Date d'achèvement de la recherche | Examinateur |
|---|---|---|
| LA HAYE | 04-11-1983 | HOFFMANN K.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant